**Europäisches Patentamt**

**European Patent Office**

**Office européen des brevets**

(19)

(11) Veröffentlichungsnummer: **0 043 954**

**A2**

(12) ## EUROPÄISCHE PATENTANMELDUNG

(21) Anmeldenummer: **81104903.0**

(22) Anmeldetag: **25.06.81**

(51) Int. Cl.³: **B 60 K 31/00**

(30) Priorität: **11.07.80 DE 3026423**

(43) Veröffentlichungstag der Anmeldung:
**20.01.82 Patentblatt 82/3**

(84) Benannte Vertragsstaaten:
**AT BE CH DE FR GB IT LI NL SE**

(71) Anmelder: **ULO-Werk Moritz Ullmann GmbH + Co. KG**
**Robert-Bosch-Strasse 1-12**
**D-7340 Geislingen(DE)**

(72) Erfinder: **Class, Eberhard, Dipl.-Ing. (FH)**
**Mühlstrasse 21**
**D-7340 Geislingen(DE)**

(72) Erfinder: **Schweizer, Heiner**
**Sonnenhalde 11**
**D-7347 Bad Uberkingen(DE)**

(72) Erfinder: **Frank, Günther, Dipl.-Ing.**
**Falkenweg 4**
**D-7332 Eislingen/Fils(DE)**

(74) Vertreter: **Wilhelm, Hans-Herbert Dr.-Ing. et al,**
**Wilhelm, Hans-Herbert, Dr.-Ing. Dauster, Hanjörg,**
**Dipl.-Ing. Patentanwälte Gymnasiumstrasse 31B**
**D-7000 Stuttgart 1(DE)**

(54) **Geschwindigkeitsbegrenzungsvorrichtung für Kraftfahrzeuge.**

(57) Es wird eine Einrichtung zur Geschwindigkeitsbegrenzung für Kraftfahrzeuge, insbesondere für Kleinkrafträder beschrieben, bei der das zur Kraftstoffzufuhr dienende Stellglied eines Vergasers sowohl vom Fahrzeugführer beeinflußbar ist, der damit selbst die Fahrgeschwindigkeit regeln kann, als auch über ein geschwindigkeits- und drehzahlabhängig steuernde elektronische Schaltung beeinflußbar ist, welche geschwindigkeitsabhängig eine Verstellung des Stellgliedes verhindert, so daß damit keine weitere Fahrgeschwindigkeitssteigerung erzielbar ist. Der Vorteil dieser Ausgestaltung besteht darin, daß die neue Einrichtung nicht manipuliert werden kann und daß auch großvolumigere Motoren verwendet werden können, die in einem niedrigen Drehzahlbereich gefahren werden, wodurch die Lärmemission, die bei kleinvolumigen und schnellaufenden Motoren besonders hoch ist, erheblich reduziert werden kann. Volteilhaft ist auch, daß durch die Verwendung großvolumiger Motoren hohe Anzugsmomente verwirklicht werden können, sowie die Schadstoffemission und ein überhöhter Benzinverbrauch im oberen Drehzahlbereich reduziert werden kann.

FIG.1

EP 0 043 954 A2

Geschwindigkeitsbegrenzungsvorrichtung für Kraftfahrzeuge.

Die Erfindung betrifft eine Geschwindigkeitsbegrenzungsvorrichtung für Kraftfahrzeuge, insbesondere für Kleinkrafträder, die einen Vergaser aufweisen, der mit einem
die Kraftstoffzufuhr beeinflussenden Stellglied versehen ist.

Geschwindigkeitsbegrenzungsvorrichtungen für Krafträder
sind bekannt. Beim Einsatz von Zweitaktmotoren in Krafträdern ist es nötig, die Fahrzeuge so in ihrer Geschwindigkeit zu begrenzen, daß die vom Gesetzgeber vorgeschriebene Maximalgeschwindigkeit eingehalten wird. Dabei ist
es bekannt, das System Vergaser - Motor so aufeinander
abzustimmen, daß durch eine Überfettung des Benzinluftgemisches eine Leistungsreduzierung und damit eine Geschwindigkeitsbegrenzung erzwungen wird. Der Nachteil
ist dabei ein erhöhter Benzinverbrauch bei hohen Drehzahlen und gleichzeitig eine nicht unerhebliche Schadstoffemission. Weiterhin ist es nachteilig, daß bei einer
derartigen Abstimmung der Motor bei niedrigen Drehzahlen
noch nicht in einem optimalen Leistungsbereich betrieben
wird, d.h. das Anzugsdrehmoment liegt relativ niedrig.

Ein weiterer Nachteil dieses Systems liegt darin, daß
ein geschickter Bastler durch Manipulation an den die
Geschwindigkeit bestimmenden Aggregaten relativ leicht den Einsatz der Begrenzung in höhere Geschwindigkeitsbereiche verschieben kann. Es ist auch ein anderes Geschwindigkeitsbegrenzungssystem bekannt, bei welchem
beim Erreichen einer bestimmten Drehzahl die Zündung
urterbrochen wird. Dadurch wird aber keine eigentliche
Geschwindigkeits- sonderneine Drehzahlbegrenzung erreicht und außerdem kann im Begrenzungsfall, d.h. beim
Ansprechen des Zündaussetzers, durch die damit verbundene, oft ruckartig erfolgende Geschwindigkeitsverringerung des Fahrzeuges das sichere Lenken und damit die
Sicherheit des Kraftradfahrers beeinträchtigt werden.

Der Erfindung liegt die Aufgabe zugrunde, eine Geschwindigkeitsbegrenzungsvorrichtung zu schaffen, die
es ermöglicht, die Geschwindigkeit an Kraftfahrzeugen,
insbesondere an Kleinkrafträdern, unmanipulierbar zu
begrenzen und gleichzeitig die Lärm- und Schadstoffemission sowie den Benzinverbrauch solcher Fahrzeuge
zu reduzieren.

Die Erfindung besteht darin, daß das Stellglied über
ein Signal sowohl vom Fahrzeugfahrer als auch von einer
geschwindigkeits- und drehzahlabhängig steuernden elektronischen Schaltung beaufschlagt werden kann. Durch
diese Ausgestaltung ist es möglich, das Benzinluftgemisch über den Vergaser in doppelter Weise zu beeinflussen. Zum einen wird die Möglichkeit gegeben, daß
der Fahrzeugfahrer in bekannter Weise z.B. über einen
Gaszug die Geschwindigkeit selbst regeln kann, dies
aber nur so lange, bis eine bestimmte, vorgegebene Geschwindigkeit erreicht ist. So lange wird das Stellglied gemäß dem Wunsch des Fahrzeugfahrers beeinflußt.
Nach Erreichen dieser Geschwindigkeit wird das Stellglied über eine geschwindigkeits- und drehzahlabhängig
steuernde elektronische Schaltung beaufschlagt, und
zwar in der Weise, daß ein weiteres Verstellen des Stellgliedes nicht mehr geschehen kann. Prinzipiell wird durch die Erfindung das Fahren solcher Krafträder bei höheren Geschwindigkeiten nicht ausgeschlossen. Eine elektronische Schaltung kann aber so aufgebaut werden, daß eine Manipulation von einem Bastler o.dgl. nicht vorgenommen werden kann. Der große Vorteil der Erfindung liegt darin, daß dadurch auch großvolumigere Motoren, z.B. für Kleinkrafträder verwendet werden können, die dann in einem niedrigen Drehzahlbereich gefahren werden, wodurch die Lärmemission, die ja bei den kleinvolumigen und schnellaufenden Motoren besonders hoch ist, erheblich reduziert werden kann. Bei der Verwendung eines großvolumigen Motors kann durch entsprechende Ausgestaltung das Leistungsmaximum so verschoben werden, daß schon bei niedrigen Drehzahlen hohe Anzugsmomente auftreten, die Leistung im Fahrbereich optimiert und die Schadstoffemission ebenso wie der überhöhte Benzinverbrauch im oberen Drehzahlbereich reduziert werden.

Als Stellglied kann die Düsennadel vorgesehen sein, die an einem Gasschieber befestigt ist. Der Gasschieber seinerseits kann über ein Verstellaggregat durch die geschwindigkeits- und drehzahlabhängig steuernde elektronische Schaltung steuerbar sein. Dabei kann die Sollwertvorgabe, also diejenige Geschwindigkeit, die der Fahrzeugfahrer zu fahren wünscht, so vorgenommen werden, daß der Gasschieber über einen Gaszug entsprechend eingestellt wird, es kann aber auch vorgesehen sein, die Stellung des Gasdrehgriffs über einen Potentiometer, eine Lichtschranke oder ähnliches zu erfassen und als Sollwert der elektronischen Schaltung zuzuführen.

Dieses Ansteuern des Gasschiebers kann z.B. über ein Verstellaggregat bewirkt werden, welches von der elektronischen Schaltung gesteuert wird. Dabei kann das Verstellaggregat z.B. ein Stellmotor sein, der in Abhängigkeit von der elektronisch ermittelten Stellgröße den Gasschieber über ein Ritzel und eine Zahnstange sowie über einen fest mit dem Gasschieber verbundenen Mitnehmerstift verstellt. Ein solcher Stellmotor kann recht klein sein und braucht keine hohen Antriebsmomente aufzuweisen, da der Gasschieber ohne großen Kraftaufwand relativ leicht bewegt werden kann.

Als Gasschieber kann ein einteiliger Gasschieber verwendet werden, auf den der Stellmotor über ein Ritzel und eine an diesem angebrachte Zahnstange wirkt, es können aber auch im Vergaser zwei als Lose ausgebildete Gasschieber axial übereinander angeordnet sein, von denen der obere vom Gaszug beaufschlagt wird und der untere das als Düsennadel o.dgl. ausgebildete Stellglied trägt. In beiden Fällen kann die Stellung des Gasschiebers, der das Stellglied trägt, über eine Lichtschranke oder potentiometrisch erfaßt werden. Dasselbe kann auch mit Hilfe induktiver Aufnehmer geschehen.

Durch die oben als letzte genannte Ausbildung ist der Gasschieber in zwei z.B. über eine Feder miteinander verbundene Gasschieber unterteilt, die es erlauben, das Stellglied zum einen über einen Gaszug und zum anderen unabhängig davon über eine elektronische Schaltung zu beaufschlagen. Wenn der obere Gasschieber über den Gaszug beaufschlagt wird, wird auch der untere Gasschieber entsprechend der Beeinflussung durch den Gaszug über die Feder mit verschoben und damit das Stellglied betätigt. Erreicht das Fahrzeug jetzt eine bestimmte Geschwindigkeit, so kann die elektronisch steuernde Schaltung ansprechen und in geeigneter Weise eine Steuerung des unteren Gasschieberteils bewirken, auf die der Fahrzeugfahrer keinen Einfluß mehr hat. Damit ist die Stellung des Stellgliedes unabhängig von einem weiteren Hochdrehen des Gaszuges. Die Regelung kann dadurch erfolgen, daß das Ritzel und die mit diesem zusammenarbeitende Zahnstange so über einen Mitnehmerstift an dem unteren Schieberteil angreifen, daß ein weiteres Verstellen des an diesem befestigten Stellgliedes solange vom Fahrer nicht mehr geschehen kann, bis die Fahrzeuggeschwindigkeit wieder unter die Ansprechschwelle der Regelung abfällt.

Die Stellung des unteren Gasschiebers (Istwert) kann z.B. in vorteilhafter Weise über eine Lichtschranke und einen ebenfalls vom Ritzel des Stellmotors verstellbaren Lichtschrankenschieber der elektronischen Schaltung zugeführt werden. Eine solche Lichtschranke kann sehr platzsparend, z.B. unterhalb der Zahnstange, welche das Verschieben des unteren Gasschiebers bewirkt, angeordnet werden. Es kann aber auch ein potentiometrischer Abgriff erfolgen.

In vorteilhafter Weise ist die elektronische Schaltung mit zwei Impulsformerstufen beschaltet, von denen die eine die von einem mit dem Fahrzeugmotor verbundenen Generator drehzahlabhängig anliegenden Spannungswert und die andere die am Tachometer des Fahrzeugs geschwindigkeitsabhängig erzeugten Spannungswerte in Analogsignale umwandelt, die ihrerseits einer Umschalteinrichtung zugeführt werden. Die Umschalteinrichtung kann im wesentlichen aus einer Transistorschaltung bestehen, die so arbeitet, daß sie die drehzahlabhängig arbeitende Impulsformerstufe dann abschaltet, wenn von der geschwindigkeitsabhängig arbeitenden Impulsformerstufe ein Analogsignal vorliegt. Dadurch wird der große Vorteil erzielt, daß die Stellung des Stellgliedes solange drehzahlabhängig geregelt ist, wie vom Tachometer kein Signal vorliegt. Dies wird dann der Fall sein, wenn entweder das Fahrzeug steht, wodurch dann die drehzahlabhängig arbeitende Impulsformerstufe eine Regulierung des unteren Gasschiebers bewirkt. Dies hat zur Folge, daß

0043954

solche Fahrzeuge im Leerlauf nicht mehr auf die einen erheblichen Lärm verursachenden hohen Drehzahlen gebracht werden kann. Wenn die Tachometerwelle zum Zweck des Ausschaltens der Geschwindigkeitsbegrenzungsvorrichtung von einem Bastler abgehängt wird, tritt der Vorteil auf, daß in diesem Falle auch während der Fahrt die Drehzahl des Fahrzeuges über die dann drehzahlabhängig arbeitende elektronische Schaltung begrenzt ist. Dadurch wird es nahezu unmöglich, die elektronische Regelung der Geschwindigkeit zu manipulieren.

Da sowohl die von der Tachowelle als auch von dem Generator, der z.B. die Zündspule sein kann, ausgehenden Impulse Schwankungen unterworfen sind, ist es zweckmäßig, wenn die Analogsignale geglättet werden. Danach können sie zwei integrierten Schaltkreisen zugeführt werden, die vorteilhafterweise in Brückenschaltung geschaltet sind, und dort mit einem variabel vorgebbaren Sollwert verglichen werden. Die variable Sollwertvorgabe hat den Vorteil, daß eine solche Geschwindigkeitsbegrenzungsvorrichtung für gleiche Motoren, Auspuffanlagen usw. bei verschiedensten Fahrzeugtypen und verschiedensten Geschwindigkeitsbegrenzungen in z.B. verschiedenen Ländern eingesetzt werden kann. Der Vergleich zwischen Sollwert und dem z.B. vom Tachometer stammenden Analogsignal wird über die Brückenschaltung in einen Spannungswert umgewandelt, welcher dann die Verschiebung des unteren Gasschiebers über den Verstellmotor zur Folge hat. Dies geschieht solange, bis über die Lichtschranke oder ein Potentiometer ein der Stellung des unteren Gasschiebers entsprechender Spannungswert vorliegt, der so der Brückenschaltung zugeführt wird, daß bei dem vorgegebenen Wert, welcher der gewünschten Begrenzung der Geschwindigkeit entspricht, ein Abgleich der Brückenschaltung erfolgt, was zur Folge hat, daß sich der Verstellmotor nicht mehr weiterbewegt.

Zweckmäßig ist es, wenn das Ausgangssignal entsprechend der für den Verstellmotor benötigten Spannungswerte über Transistorverstärkungsstufen verstärkt wird.

Vorteilhaft ist es weiterhin, wenn die elektronische Schaltung mit einer Strombegrenzungsstufe beschaltet ist, die die Belastung des Stellmotors begrenzt, wenn dieser an seine Endanschläge läuft. Dadurch kann auf Endschalter verzichtet werden, ohne daß der Motor überlastet wird.

Die geschwindigkeitsabhängigen Signal können auch über kontaktlose Geber, wie z.B. Hall-Sensoren, eine Lichtschranke oder einem Magnet mit einer Geberspule am Getriebe oder an der Hinterachse abgenommen werden. Dies ist insofern vorteilhaft, als daß durch die Manipulationsmöglichkeit gegenüber einem Abgriff am Tachometer erschwert ist.

Schließlich ist es auch vorteilhaft, wenn der Vergaser und die elektronische Schaltung als Einheit in einem Gehäuse angeordnet sind, wobei die elektronische Schaltung in einem abgedichteten Raum untergebracht ist.

Grundsätzlich ist es von Vorteil, wenn Vergaser für unterschiedliche Fahrzeugkategorien bei der jeweiligen Höchstgeschwindigkeit nach der gleichen Impulszahl geregelt werden. Dadurch stellt sich bei Beaufschlagung sowohl des kleineren Vergasers bei niedriger Höchstgeschwindigkeit als auch eines größeren Vergasers bei hoher Höchstgeschwindigkeit mit der gleichen Impulsfrequenz an jedem beliebigen Fahrzeug immer nur die für das Fahrzeug vorgegebene Höchstgeschwindigkeit ein.

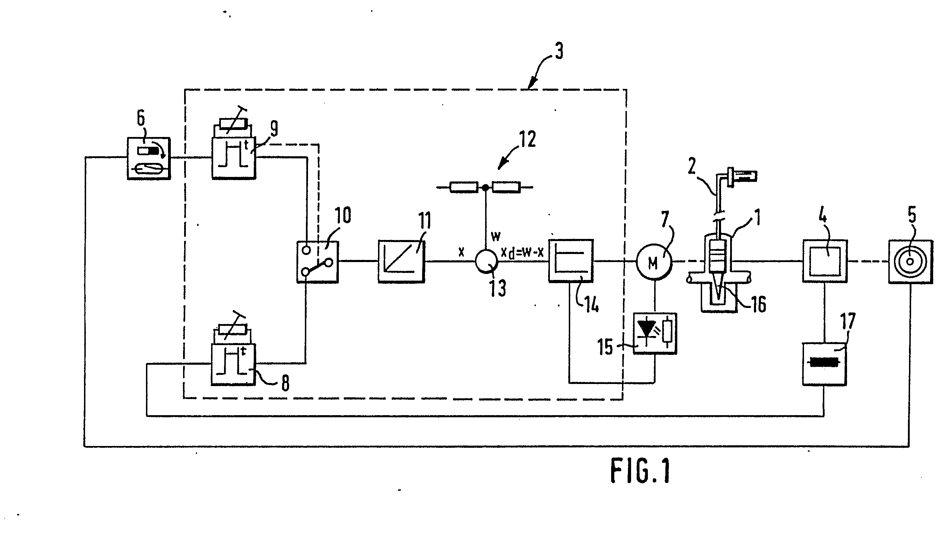

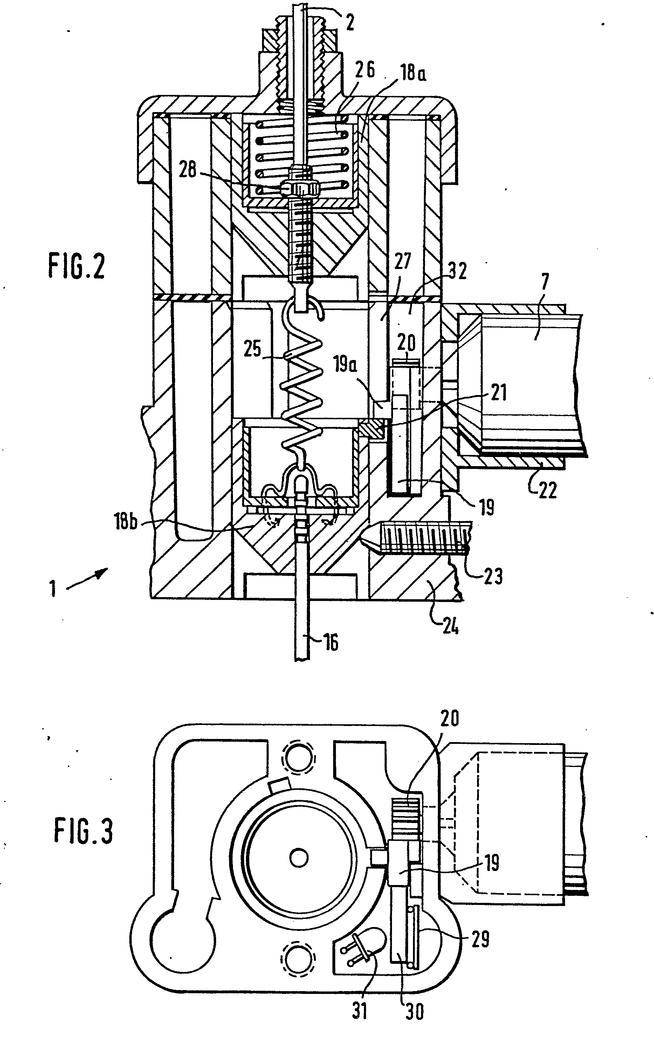

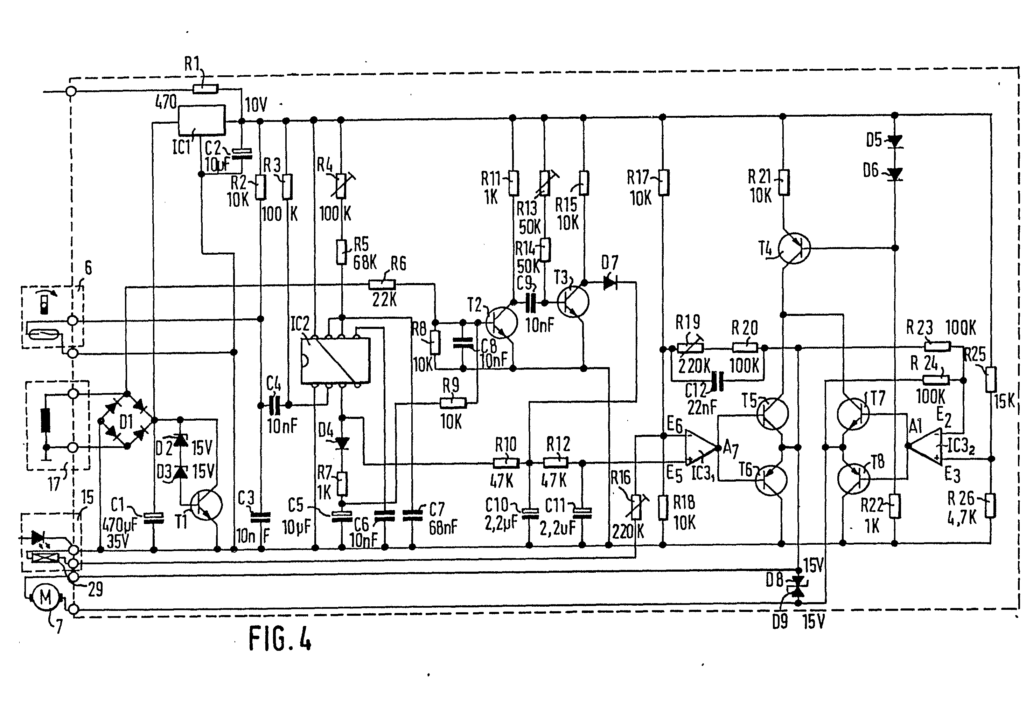

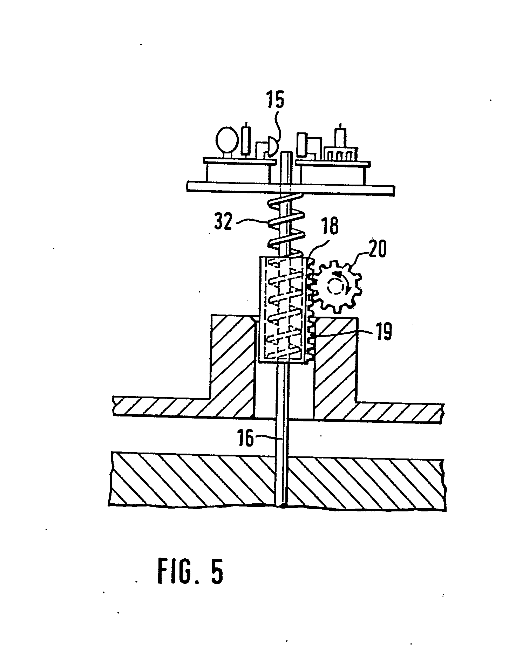

Die Funktionsweise und die Vorrichtungsmerkmale eines Ausführungsbeispieles einer erfindungsgemäßen Geschwindigkeitsbegrenzungsvorrichtung werden im folgenden anhand der Figuren näher erläutert. Es zeigen
Figur 1 ein Blockschaltbild einer erfindungsgemäßen Geschwindigkeitsbegrenzungsvorrichtung, Figur 2 einen Längsschnitt durch einen
Teil eines gemäß der Erfindung aufgebauten
Vergasers, Figur 3 einen Querschnitt durch
einen erfindungsgemäß aufgebauten Vergaser
mit Verstellmotor, Figur 4 einen Schaltplan
einer erfindungsgemäßen elektronischen Schaltung und Figur 5 eine Prinzipskizze eines
Vergasers einer anderen Bauart.

In der Fig. 1 ist mit 1 ein Vergaser bezeichnet, der
schematisch dargestellt über einen Gaszug 2 und einen
von einer elektronischen Schaltung 3 beaufschlagten
Stellmotor 7 steuerbar ist. Je nach Stellung des Vergasers 1 wird der mit 4 bezeichnete Motor des Fahrzeuges dieses auf eine Geschwindigkeit bringen, die an den
mit 5 bezeichneten Rädern über einen Tachometer 6 gemessen werden kann. Die Geschwindigkeit kann aber auch über
kontaktlose Geber, die nicht näher gezeigt sind, am Getriebe oder an den Hinterachsen abgegriffen werden. Die
elektronische Schalteinrichtung weist zwei mit 8 und 9
bezeichnete Impulsformerstufen auf, die jeweils einer
Umschalteinrichtung 10 zugeführt werden. Je nach Stellung
der Umschalteinrichtung 10 werden entweder die von einem
Generator am Motor drehzahlabhängig erzeugten und über
die Impulsformerstufe 8 rechteckig geformten Analogimpulse weitergeleitet oder aber diejenigen, die über das
Tachometersignal entsprechend der Geschwindigkeit des
Fahrzeugs hinter der Impulsformerstufe 9 vorliegen. Nach
einer Glättungsstufe 11 werden die Analogsignale einem
Differenzbildner 13 zugeführt, wo sie mit den über eine
variable Sollwertvorgabe 12 angegebenen Werten verglichen werden. Die Differenz wird dann einer Reglerbrückenschaltung 14 zugeführt, von deren Ausgängen ein Stellmotor 7 beaufschlagt werden kann, der seinerseits die
Regelung des Stellgliedes 16 am Vergaser vornimmt. Die
Stellung des Stellgliedes 16 wird dabei von der Lichtschranke 15 überwacht und dem Regler 14 zugeschaltet,
ebenso könnte dies potentiometrisch geschehen.

Eine solche Geschwindigkeitsbegrenzungsvorrichtung kann
wie folgt arbeiten:

Solange das Fahrzeug steht, also von den Rädern 5 über
den Tachometer 6 kein Signal der elektronischen Schaltung
3 zugeführt wird, ist diese so geschaltet, daß sie die
vom Motor und dem Generator 17, der z.B. die Zündspule
sein kann, ausgehenden drehzahlabhängigen Impulse einer
Impulsformerstufe 8 zuführt, die Rechteckimpulse erzeugt.
Diese Impulse können dann über die Umschalteinrichtung 10
geglättet dem Differenzbildern 13 zugeführt werden, von
wo sie der Reglerbrücke 14 zugeführt wird. Mit dem Gaszug kann vom Fahrzeugfahrer das Stellglied 16 solange
betätigt werden, bis es sich in einer Stellung befindet,
in der die dieser Stellung entsprechende Spannung, welche an der Lichtschranke entsteht, der maximal über die
Sollwertvorgabe zulässigen entspricht. Danach tritt der
Regler in Runktion und blockiert eine weitere Verschiebung des Stellgliedes 16 über den Gaszug 2. Dies hat zur
Folge, daß somit im Leerlauf ein mit dieser Geschwindigkeitsbegrenzungsvorrichtung ausgestattetes Fahrzeug keine
so hohen Drehzahlen mehr erreichen kann, wodurch die
Lärmemission erheblich herabgesetzt werden kann. Auch
tritt diese Regelung dann in Kraft wenn der Tachometer
abgeklemmt wird. Dann schaltet das Drehzahlsignal ebenfalls durch und die Drehzahl wird auf einen Wert begrenzt,
der noch unter der entsprechenden Drehzahl bei Maximalgeschwindigkeit im höchsten Gang liegt. Dadurch kann das
Ziel der Manipulation, eine höhere Endgeschwindigkeit,
nicht erreicht werden.

In dem Fall aber, daß vom Tachometer ein Signal erzeugt wird, wird die Umschalteinrichtung 10 über die Impulsformerstufe 9 betätigt, wodurch jetzt die Regelung des Fahrzeuges drehzahlunabhängig erfolgt. Dadurch kann im oberen Drehzahlbereich die Leistung im Fahrbereich optimiert und die Schadstoffemission und der überhöhte Benzinverbrauch reduziert werden. Die weitere Verarbeitung der von der Impulsformerstufe 9 erzeugten geschwindigkeitsabhängigen Analogsignale erfolgt genauso wie die der drehzahlabhängigen Analogsignale, die von der Impulsformerstufe 8 erzeugt werden. Sie werden ebenso über die Glättungsstufe 11 im Differenzbildner 13 zugeführt, gelangen von dort als Differenzwert zwischen Soll- und Istwert auf die Reglerbrücke 14, die dann das Stellglied 16 über den Motor 7 unabhängig regeln kann, wenn eine zu hohe Geschwindigkeit gefahren wird.

Wie ein erfindungsgemäßer Vergaser, der sowohl vom Fahrzeugfahrer als auch über eine geschwindigkeits- und drehzahlabhängig steuernde elektronische Schaltung beaufschlagt werden kann, aufgebaut sein kann, zeigt die Ausführungsform in Fig. 2.

Dort ist ein Vergaser gezeigt, der zwei in einem Vergasergehäuse 24 axial übereinander angeordnete Gasschieber 18a und 18b aufweist. Die beiden Gasschieber 18a und 18b sind als Lose ausgebildet und über eine Feder 25 miteinander verbunden. Am oberen Gasschieber 18a greift der Gaszug 2 über einen Schraubstift 28 gegen die Kraft einer Feder 26 an. Der untere Gasschieber 18b trägt das Stellglied 16, in diesem Falle eine Düsennadel, wobei die tiefste Stellung des unteren Schiebers 18b und damit des Stellgliedes 16 über eine Leerlaufeinstellschraube 23 eingestellt werden kann. Der Gasschieber 18b weist einen Mitnehmerstift 21 auf, an welchem eine Zahnstange 19, die über ein Ritzel 20 von einem in einem Motorflansch 33 gehaltenen Stellmotor 7 beaufschlagt wird, angreift. In der Stellung, die in Fig. 2 gezeigt ist, regelt der Stellmotor, der über eine in Fig. 4 gezeigte elektronische Schaltung geregelt wird, die Stellung des unteren Stellgliedes 18b. Dabei kann die Zahnstange 19 in einer Kammer 32 des Vergasers so auf- und abbewegt werden, daß der an ihr befestigte Nocken 19a innerhalb der Aussparung 27 die maximale Höhe des unteren Gasschiebers 18b bestimmen kann.

In der Ausgangsstellung, d.h. also solange das Fahrzeug steht, befindet sich der Nocken 19a und die Zahnstange 19 in einer oberen, nicht gezeigten Stellung. Der Gaszug 2 ist nicht betätigt und daher ist der obere Schieber 18a von der Feder 25 so mit dem unteren Schieber 18b verbunden, daß sich die beiden Schieber 18a und 18b berühren und eine im gesamten verschiebbare Einheit bilden. Durch die Betätigung des Gaszuges 2 werden beide Schieber als Einheit verschoben, wodurch die Regelung des Stellgliedes 16 erfolgen kann. Erreicht das Fahrzeug jetzt eine bestimmte, fest vorgegebene Maximalgeschwindigkeit, so wird die Zahnstange 19 in eine Stellung gefahren, in der der Nocken 19a mit dem Mitnehmerstift 21 in Berührung kommt und ein weiteres Verschieben des unteren Gleitschiebers 18b in Richtung des oberen Gleitschiebers 18a dadurch blockiert. Ein weiteres Verdrehen des Gasgriffes hat dann zur Folge, daß sich ein Zwischenraum zwischen dem unteren Schieber 18b und dem Schieber 18a bildet, wobei aber der untere Schieber 18b seine Stellung beibehält und damit eine Erhöhung der Geschwindigkeit verhindert. In dieser Stellung befindet sich der Gasschieber 18b je nach Geschwindigkeit zwischen dem oberen und dem unteren Anschlag. Ändert sich die Geschwindigkeit wieder, so wird der untere Gasschieber 18b entsprechend der Regeldifferenz nachgeführt.

Wie die Fig. 3 zeigt, kann die Stellung des unteren Gasschiebers indirekt über die Stellung eines Lichtschrankenschiebers 30 bestimmt werden. Dieser Lichtschrankenschieber 30 kann entsprechend der Stellung des unteren Gasschiebers 18b zwischen einem Fotowiderstand 29 und einer Leuchtdiode 31, die zusammen die Lichtschranke 15 bilden, verschoben werden. Da diese Elemente nur sehr wenig Platz in Anspruch nehmen, können sie in einfacher Weise im Vergasergehäuse untergebracht werden.

Die Steuerung des Stellgliedes 16 kann von einer elektronischen Schaltung übernommen werden, die nach einem in der Fig. 1 gezeigten Schaltplan aufgebaut sein kann. Dabei kann die Elektronik über das vorhandene Wechselstromnetz des Fahrzeuges versorgt werden. Die Gleichrichtung der Wechselspannung wird über die Gleichrichterbrücke D1 und den Glättungskondensator C1 besorgt. Von dem Transistor T1 zusammen mit den Dioden D2 und D3 wird die Spannung in diesem Fall auf 30 V begrenzt. Der Spannungsregler $IC_1$ stabilisiert die Spannung auf 10 V.

Die geschwindigkeitsabhängig arbeitende Impulsformerstufe 9, wie sie in der Fig. 1 gezeigt ist, besteht in der elektronischen Schaltung aus einem IC2, R2, R3, R4, R5, C3, C4, C6, C7, wodurch eine Frequenzspannungsumsetzung des Tachometersignals erfolgt. Die in der Fig. 1 mit 11 bezeichnete Glättungseinrichtung besteht aus dem R10, C10, R12, C11 und leitet das geglättete Signal als Analogsignal dem Eingang $B_5$ am $IC3_1$ zu. Die zweite Impulsformerstufe, die drehzahlabhängig arbeitet, besteht aus R6, R8, C8, R11, T2, C9, R13, R14, R15 und T3 und bewirkt eine Frequenzspannungsumsetzung, um aus dem Drehzahlsignal, proportional der Wechselspannungsfrequenz des Zünders 17, ein Analogsignal zu erhalten. Solange vom Tachometer 6 kein Signal kommt, ist der Kondensator C5 entladen und die drehzahlabhängig arbeitende Impulsformerstufe in Betrieb. In diesem Falle gelangt die Gleichspannung über D7 an C10, R12, C11, die eine Glättung der Spannung bewirken, wovon sie dann geglättet zum Spannungsvergleich am $IC3_2$ anliegt. Die Umschalteinrichtung besteht im wesentlichen aus dem Transistor T2, dessen Basispotential dann ansteigt, wenn vom Tachometer 6 ein Signal erzeugt wird, da hierdurch der Kondensator C5 geladen wird. Gleichzeitig wird damit die drehzahlabhängige Impulsformerstufe 8 abgeschaltet. Zum Spannungsvergleich am $IC3_1$ steht jetzt das Geschwindigkeitssignal an. Durch diese Umschaltung wird es ermöglicht, daß dann, wenn der Tachometer 6 kein Signal abgibt, das Drehzahlsignal durchschaltet und die Drehzahl auf einen Wert begrenzt, der noch unter der entsprechenden Drehzahl bei Maximalgeschwindigkeit im höchsten Gang liegen kann. Dadurch wird zum einen das Ziel erreicht, daß keine Manipulation vorgenommen werden kann und außerdem das Fahrzeug im Leerlauf nicht über einen fest vorgebbaren Drehzahlwert gedreht werden kann.

Die in Fig. 1 mit 14 bezeichnete Reglerbrückenschaltung kann mit zwei integrierten Schaltkreisen $IC3_1$ und $IC3_2$ realisiert werden. Die Transistoren T5, T6, T7 und T8 dienen zur Ausgangsstromerhöhung und damit zu einer Anpassung an die Werte des Stellmotors. Die Gegenkopplung wird über die Widerstände R19, R20 und R24 besorgt, wobei über den R19 das Maß der Gegenkopplung variabel einstellbar ist. Der von der Lichtschranke 15 ausgehende Strom, der abhängig von der Position des unteren Gasschiebers 18b ist, wird dem Eingang E6 des $IC3_1$ und über die Gegenkopplung dem Eingang E2 des $IC3_2$ zugeführt. Mit R16 kann der Proportionalbereich des Reglers $IC3_1$ und $IC3_2$ bestimmt werden. Der Transistor T4 sowie der Widerstand R21 und die beiden Dioden D5 und D6 dienen zur Strombegrenzung des Motors 7, wenn dieser an seine Endanschläge läuft.

Die Funktionsweise des Reglers und damit der elektrischen Schaltung ist nun die folgende:

Solange die Spannung am Eingang $E_5$ des $IC3_1$ kleiner ist als die Spannung am Eingang $E_6$, ist die Spannung am Ausgang $A_7$ 0 V und am Ausgang $A_1$ des $IC3_2$ 10 V. Der Stellmotor 7 ist in der oberen Endstellung. Die Lichtschranke 15 ist beleuchtet, d.h. der Fotowiderstand 29 ist niederohmig. Wenn jetzt die Spannung am IC3 Eingang $E_5$ über die Spannung an $E_6$ ansteigt, was einer Geschwindigkeitserhöhung entspricht, wird die Spannung am Ausgang $A_7$ + 10 V und am Ausgang $A_1$ des $IC3_2$ 0 V. Das hat zur Folge, daß der Stellmotor 7 nach unten läuft, wodurch gleichzeitig die Lichtschranke langsam abgedunkelt wird. Dadurch wird der Widerstand R29 hochohmiger, was wiederum bewirkt, daß am Eingang $E_6$ die Spannung ansteigt. Wenn Spannungsgleichheit zwischen $E_5$ und $E_6$ herrscht, bleibt der Motor stehen. Dadurch steht der untere Gasschieber 18b und damit das Stellglied 16 je nach Geschwindigkeit zwischen dem oberen und unteren Anschlag. Ändert sich die Geschwindigkeit wieder, so wird der untere Gasschieber 18b entsprechend der Regeldifferenz nachgeführt.

Eine solche Geschwindigkeitsbegrenzungsvorrichtung kann auch in Personenkraftwagen eingesetzt werden, obwohl sich ihre besonderen Vorteile bei einem Kleinkraftrad am meisten bemerkbar machen. Ein mit dieser Geschwindigkeitsbegrenzungsvorrichtung versehenes Kleinkraftrad kann mit einem großvolumigeren Motor ausgestattet werden, ohne daß befürchtet werden muß, daß die Fahrzeuge auf höhere Geschwindigkeiten als die für sie vorgeschriebenen manipuliert werden. Dadurch kann die Lärmemission ebenso wie die Schadstoffemission und der überhöhte Benzinverbrauch im oberen Drehzahlbereich erheblich reduziert werden. Auch kann eine solche erfindungsgemäße Geschwindigkeitsvorrichtung für die verschiedensten Fahrzeugtypen und verschiedensten Geschwindigkeitsbegrenzungen in unterschiedlichen Ländern in einfacher Weise angepaßt werden.

Es ist nicht unbedingt notwendig, einen Vergaser zu verwenden, der aus zwei Gasschiebern aufgebaut ist. Es kann auch ein Vergaser zum Einsatz kommen, der einen einzigen Gasschieber 18 aufweist, wie dies in Fig. 5 gezeigt ist. Dort ist am Gasschieber 18 in der Art einer Zahnstange 19 eine Zahnung eingebracht, in die das von dem nicht näher gezeigten Stellmotor beaufschlagte Antriebsritzel 20 eingreift und dadurch das Verschieben des Gasschiebers und der an diesem befestigten Düsennadel 16 hervorruft. Bei dieser Ausführungsform wird der elektronischen, ebenfalls nicht näher gezeigten Schaltung der Sollwert als elektrisches Signal zugeführt, das z.B. am Gasdrehgriff mit Hilfe eines Potentiometers oder einer Lichtschranke erzeugt wird, je nach Stellung des Gasdrehgriffes. Die hierbei zum Einsatz kommende elektronische Schaltung könnte ähnlich der in Fig. 1 gezeigten aufgebaut sein. Die dort gezeigte Schaltung müßte lediglich so ergänzt werden, daß der Stellmotor 7 solange direkt von dem der Stellung des Gasdrehgriffes entsprechenden Signal angesteuert wird, bis die Begrenzungsschaltung anspricht und ein weiteres Verstellen des Gasschiebers direkt über den Gasdrehgriff verhindert. Der Istwert wird über die von einem Fotowiderstand und einer Leuchtdiode gebildeten Lichtschranke 15 ermittelt. Dasselbe könnte natürlich auch mit einem Schiebepotentiometer erreicht werden. Diese Ausführungsform hat den Vorteil, daß sie platzsparend ist und mit geringem konstruktiven Aufwand verwirklicht werden kann. Vom Stellmotor müssen keine sehr großen Kräfte aufgebracht werden, es muß lediglich die Kraft der Feder 32 überwunden werden, die dazu dient, den Gasschieber 18 bei Ausfall der Stromversorgung in eine untere Position zu bringen, in der er den Vergaser abschließt. Es versteht sich, daß der Gasschieber 18 nicht unbedingt kolbenförmig sein muß - es kann im Prinzip auch eine Platte oder eine Klappe durch die erfindungsgemäße Vorrichtung gesteuert werden. Auch muß zur Verschiebung des Gasschiebers nicht unbedingt eine Ritzel-Zahnstangen-Kombination vorgesehen sein. Z.B. kann auch ein Hubmagnet oder eine Bimetallfeder zum Einsatz kommen.

0043954

- 1 -

Patentansprüche:

1. Geschwindigkeitsbegrenzungsvorrichtung für Kraftfahrzeuge, insbesondere für Kleinkrafträder, die
   einen Vergaser aufweisen, der mit einem die Kraftstoffzufuhr beeinflussenden Stellglied versehen
   ist,
   dadurch gekennzeichnet,
   daß das Stellglied (16) über ein Signal sowohl vom
   Fahrzeugfahrer als auch über eine geschwindigkeits-
   und drehzahlabhängig steuernde elektronische Schaltung (3) beaufschlagbar ist.

2. Geschwindigkeitsbegrenzungsvorrichtung nach Anspruch 1,
   dadurch gekennzeichnet,
   daß als Stellglied eine Düsennadel (16) vorgesehen
   ist, die an einem Gasschieber (18) befestigt ist.

3. Geschwindigkeitsbegrenzungsvorrichtung nach Anspruch 1 und 2,
   dadurch gekennzeichnet,
   daß der Gasschieber (18) über ein Verstellaggregat
   durch die geschwindigkeits- und drehzahlabhängig
   steuernde elektronische Schaltung (3) steuerbar
   ist.

4. Geschwindigkeitsbegrenzungsvorrichtung nach Anspruch 1 bis 3,
   dadurch gekennzeichnet,
   daß das Verstellaggregat ein Stellmotor ist, welcher
   in Abhängigkeit von der elektronisch ermittelten
   Stellgröße auf den Gasschieber (18) wirkt.

5. Geschwindigkeitsbegrenzungsvorrichtung nach einem
   der vorangegangenen Ansprüche,

dadurch gekennzeichnet,
daß die Stellung des Gasschiebers (18) über eine
Lichtschranke (15) oder potentiometrisch erfaßt
wird.

6. Geschwindigkeitsbegrenzungsvorrichtung nach einem
der vorangegangenen Ansprüche,
dadurch gekennzeichnet,
daß im Vergaser (1) zwei als Lose ausgebildete
Gasschieber (18a, 18b) axial übereinander angeordnet sind, von denen der obere Gasschieber (18a)
vom Gaszug (2) beaufschlagt wird und der untere
Gasschieber (18b) das als Düsennadel ausgebildete
Stellglied (16) trägt, wobei die beiden Gasschieber (18a, 18b) über eine Feder (25) miteinander
verbunden sind.

7. Geschwindigkeitsbegrenzungsvorrichtung nach einem
der Ansprüche 1 bis 6,
dadurch gekennzeichnet,
daß der Stellmotor (7) in Abhängigkeit von der elektronisch ermittelten Stellgröße auf den unteren Gasschieber (18b) über ein Ritzel (20) über eine Zahnstange (19) und einen fest mit dem Gasschieber (18b)
verbundenen Mitnehmerstift (21) wirkt.

8. Geschwindigkeitsbegrenzungsvorrichtung nach einem
der Ansprüche 1 bis 7,
dadurch gekennzeichnet,
daß der Istwert des unteren Gasschiebers (18b) über
eine Lichtschranke (15) und einen von dem Ritzel (20)
des Stellmotors (7) verstellbaren Lichtschrankenschieber (30) der elektronischen Schaltung (3) zugeführt wird.

9. Geschwindigkeitsbegrenzungsvorrichtung nach einem der Ansprüche 1 bis 8,

dadurch gekennzeichnet,

daß die elektronische Schaltung (3) mit zwei Impulsformerstufen (8, 9) beschaltet ist, von denen die
eine die von einem mit dem Fahrzeugmotor (4) verbundenen Generator (17) drehzahlabhängig anliegenden Spannungswerte und die andere die vom Tachometer
(6) des Fahrzeuges geschwindigkeitsabhängig erzeugten Spannungswerte in Analogsignale umwandelt, die
einer Umschalteinrichtung (10) zugeführt werden.

10. Geschwindigkeitsbegrenzungsvorrichtung nach einem
der Ansprüche 1 bis 9,

dadurch gekennzeichnet,

daß die Umschalteinrichtung (10) im wesentlichen
aus einer Transistorschaltung besteht, die die
drehzahlabhängig arbeitende Impulsformerstufe (8)
dann abschaltet, wenn von der geschwindigkeitsabhängig arbeitenden Impulsformerstufe (9) ein Analogsignal vorliegt.

11. Geschwindigkeitsbegrenzungsvorrichtung nach einem
der Ansprüche 1 bis 10,

dadurch gekennzeichnet,

daß die von der Umschalteinrichtung (3) weitergegebenen Analogsignale mit einem über eine variable
Sollwertvorgabe (12) vorgegebenen Wert verglichen
werden.

12. Geschwindigkeitsbegrenzungsvorrichtung nach einem
der Ansprüche 1 bis 11,

dadurch gekennzeichnet,

daß die Differenz zwischen Sollwert und Istwert
einer Reglerbrückenschaltung (14) zugeführt wird,
die aus zwei integrierten Schaltkreisen ($IC3_1$ und
$IC3_2$) aufgebaut ist, und dort mit dem von der Lichtschranke (15) erzeugten Wert verglichen wird.

13. Geschwindigkeitsbegrenzungsvorrichtung nach einem der Ansprüche 1 bis 12, dadurch gekennzeichnet, daß die Ausgangssignale der integrierten Schaltkreise ($IC3_1$ und $IC3_2$) über Transistoren (T5, T6, T7, T8) verstärkt dem Stellmotor zugeführt werden.

14. Geschwindigkeitsbegrenzungsvorrichtung nach einem der Ansprüche 1 bis 13, dadurch gekennzeichnet, daß die elektronische Schaltung (3) mit einer Strombegrenzungsstufe (T4, R21, D5, D6) für den Stellmotor (7) beschaltet ist.

15. Geschwindigkeitsbegrenzungsvorrichtung nach einem der vorangegangenen Ansprüche, dadurch gekennzeichnet, daß das vom Fahrzeugführer erzeugte Signal zur Steuerung des Stellgliedes als ein der Stellung des Gasdrehgriffs entsprechendes elektrisches Signal über Potentiometer, Lichtschranken o.dgl. erzeugt wird, welches als Sollwert einer elektronischen Schaltung zugeführt wird.

16. Geschwindigkeitsbegrenzungsvorrichtung nach einem der vorangegangenen Ansprüche, dadurch gekennzeichnet, daß die geschwindigkeitsabhängigen Signale über kontaktlose Geber, wie z.B. Hall-Sensoren, Lichtschranken oder Magnet- und Geberspule am Getriebe oder an der Hinterachse des Fahrzeugs abgenommen werden.

17. Geschwindigkeitsbegrenzungsvorrichtung nach einem der vorangegangenen Ansprüche, dadurch gekennzeichnet, daß der Vergaser und die elektronische Schaltung
als Einheit in einem Gehäuse angeordnet sind, wobei
die elektronische Schaltung (3) in einem abgedichteten Raum untergebracht ist.

FIG.1

FIG.2

FIG.3

0043954

FIG.4

3/4

0043954

FIG. 5